Europäisches Patentamt

European Patent Office

Office européen des brevets

(19)

(11) Veröffentlichungsnummer: **0 470 522 B1**

(12) # EUROPÄISCHE PATENTSCHRIFT

(45) Veröffentlichungstag der Patentschrift :
**25.05.94 Patentblatt 94/21**

(51) Int. Cl.⁵: **C01B 31/30,** C01B 31/34

(21) Anmeldenummer : **91113043.3**

(22) Anmeldetag : **02.08.91**

(54) **Verfahren zur Herstellung von Metallcarbiden.**

(30) Priorität : **08.08.90 DE 4025120**

(43) Veröffentlichungstag der Anmeldung :
**12.02.92 Patentblatt 92/07**

(45) Bekanntmachung des Hinweises auf die
Patenterteilung :
**25.05.94 Patentblatt 94/21**

(84) Benannte Vertragsstaaten :
**AT DE FR GB IT SE**

(56) Entgegenhaltungen :
**EP-A- 0 286 294
US-A- 3 825 469
US-A- 4 552 740
CHEMISTRY OF MATERIALS, N.2, 1990 C. H.
JAGGERS AND AL. "PREPARATION OF
HIGH-SUR-FACE-AREA TRANSITION-METAL
NITRIDES: Mo2N AND MoN"ZEILEN 150-157**

(73) Patentinhaber : **SKW TROSTBERG
AKTIENGESELLSCHAFT
Postfach 12 62,
Dr.-Albert-Frank-Strasse 32
D-83308 Trostberg (DE)**

(72) Erfinder : **Herrmann, Wolfgang A., Prof. Dr.
Gartenstrasse 69
W-8050 Freising (DE)**
Erfinder : **Härter, Peter, Dr.
Wendelsteinstrasse 17
W-8058 Erding (DE)**

(74) Vertreter : **Huber, Bernhard, Dipl.-Chem. et al
Patentanwälte
H. Weickmann, Dr. K. Fincke
F.A. Weickmann, B. Huber
Dr. H. Liska, Dr. J. Prechtel, Dr. B. Böhm
Postfach 86 08
20
D-81635 München (DE)**

EP 0 470 522 B1

## Beschreibung

Die Erfindung betrifft ein Verfahren zur Herstellung der Carbide von Metallen der Elemente IV B, V B und VI B des Periodensystems in Form von Pulvern, Schichten oder Filmen.

Mechanisch, chemisch und gegen Temperaturen beständige Materialien sind die Zielsetzung jeder modernen Hochleistungskeramik. Aus einer Vielzahl möglicher Stoffklassen kommt hier den Metallcarbiden besondere Bedeutung zu, vor allem dem Wolframcarbid (WC) und dem Titancarbid (TiC). Der konventionelle weg zu den Metallcarbiden besteht in den heute noch üblichen Verfahren der sog. Pulvermetallurgie. Hierbei werden Metallpulver bzw. Metalloxidpulver mit elementarem Kohlenstoff intensiv vermischt und anschließend auf hohe Temperaturen erhitzt. Nachteilig bei diesen Verfahren ist die Notwendigkeit zur Einhaltung genauer Mengenverhältnisse, um definierte Produkte zu erhalten.

Bei neueren Verfahren werden Metallcarbide wie z.B. $W_2C$ und $W_3C$ durch chemische Dampfabscheidung (CVD = Chemical-Vapour-Deposition) beispielsweise aus flüchtigen Wolframverbindungen und -komplexen gewonnen. So ist es aus US-PS 4,789,534 bekannt, bestimmte Metallcarbide durch thermische Zersetzung der entsprechenden Dialkylamid-Metallkomplexe herzustellen.

Ferner wird in der EP-A 88 113 932.3 die Abscheidung von Wolframcarbid-Filmen aus der Gasphase durch Umsetzung des flüchtigen Wolframhexafluorids mit Dimethoxyethan beschrieben.

In der DE-OS 39 07 693 wird ein chemisches Dampfabscheidungsverfahren zur Herstellung von glänzenden $W_3C$-Schichten offenbart, wobei man eine Gasmischung aus Wolframhexafluorid, Wasserstoff und einem aromatischen Kohlenwasserstoff (z.B. Benzol) einer Dampfphasenreaktion bei erhöhter Temperatur unterwirft.

Problematisch bei diesen bekannten Verfahren ist die Verfügebarkeit der metallhaltigen Ausgangsverbindungen (z.B. Amid-Komplexe, Halogenide), die nicht in technisch einfacher Weise handhabbar sind und/oder nur durch aufwendige und somit kostspielige Methoden hergestellt werden können. Außerdem führen die oft hohen erforderlichen Temperaturen meist nur zu einer einzigen, nämlich der thermodynamisch stabilsten Carbid-Phase.

Der Erfindung liegt daher die Aufgabe zugrunde, ein Verfahren zur Herstellung von Metallcarbiden von Metallen der Elemente IV B, V B und VI B des Periodensystems zu entwickeln, welches die genannten Nachteile des Standes der Technik nicht aufweist, sondern ausgehend von leicht zugänglichen und handhabbaren Ausgangsverbindungen bei vergleichsweise niedrigen Temperaturen auch ohne exakte Dosierung der Reaktionskomponenten zu den gewünschten Metallcarbiden definierter Zusammensetzung führt.

Diese Aufgabe wird erfindungsgemäß dadurch gelöst, daß man eine sauerstoffhaltige Verbindung dieser Metalle, ausgewählt aus der Gruppe Oxide, Hydroxide und Oxyhydroxide, mit einem primären oder sekundären Amin bei Temperaturen zwischen 100 und 1200°c zur Umsetzung bringt.

Es hat sich nämlich überraschenderweise gezeigt, daß sich auf diese Weise die gewünschten Metallcarbide sehr rasch in hoher Reinheit, in guter Ausbeute und ohne großen apparativen Aufwand herstellen lassen.

Dies war deshalb so überraschend, weil bei der Umsetzung beispielsweise von oxidischen Molybdänverbindungen unterschiedlicher Stöchiometrie und Struktur mit Ammoniak reine Nitride (MoN, $Mo_2N$) entstehen (vgl. Ch. H. Yaggers et. al., Chemistry of Materials 2 (1990) S. 150 - 157). Deshalb konnte nicht damit gerechnet werden, daß bei der Umsetzung dieser Metalloxide mit primären oder sekundären Aminen als Derivaten des Ammoniaks Metallcarbide gebildet werden.

Beim Verfahren der Erfindung werden Oxide und Oxyhydroxide der Metalle Chrom, Molybdän, Wolfram, Vanadin, Zirkonium sowie Tantal bevorzugt verwendet.

Besonders bevorzugt werden als sauerstoffhaltige Metallverbindungen $MO_2$, $MO_3$, $Cr_2O_3$, $ZrO_2$ oder $Ta_2O_5$ verwendet.

Anstelle der Oxide lassen sich ebensogut die entsprechenden Hydroxide (wie z.B. $Cr(OH)_3$) einsetzen, die bei erhöhter Temperatur unter Wasserabspaltung in die entsprechenden Oxide übergehen.

Auch Oxyhydroxide, d.h. sogenannte "Metallsäuren" wie z.B. Wolframsäure ($H_2WO_4 = WO_2(OH)_2$) oder Molybdänsäure können ohne Nachteile für das erfindungsgemäße Verfahren verwendet werden. Alternativ kann man auch Gemische der genannten Sauerstoffverbindungen verwenden.

Die Reaktionsgeschwindigkeit bzw. -temperatur ist oft von der Art und Vorbehandlung der sauerstoffhaltigen Metallverbindung abhängig. So reagieren beispielsweise hochgeglühte Metalloxide deutlich langsamer als ungeglühte oder frisch gefällte Verbindungen. Setzt man wasserhaltige oder wasserabspaltende Metallverbindungen ein, so empfiehlt es sich, vor der eigentlichen Umsetzung mit dem Amin eine thermische Vorbehandlung dieser Verbindungen durch Erhitzen auf 100 bis 300°C vorzunehmen, um den Wasser- und Feuchtigkeitsgehalt auf den gewünschten Wert einzustellen. Man kann auch sauerstoffhaltige Verbindungen verschiedenartiger Metalle verwenden, die ternäre Carbide bilden, um so gezielt zu gemischtmetallischen Carbidphasen zu gelangen.

Es ist im Rahmen der Erfindung auch möglich, als Ausgangsverbindungen Metallverbindungen mit einem nur geringen Sauerstoffanteil einzusetzen. So kann man beispielsweise auch sauerstoffhaltige Fehlchargen, die bei unvollständiger Umsetzung der eingesetzten Metallverbindungen entstehen, ohne weiteres in die gewünschten Metallcarbide überführen.

Als zweite Reaktionskomponente für das erfindungsgemäße Verfahren werden primäre oder sekundäre Amine eingesetzt, deren Reste in weiten Grenzen variiert werden können. Sie entsprechen vorzugsweise der allgemeinen Formel $R_1R_2NH$, in der die Reste $R_1$ und $R_2$ gleich oder verschieden sein können und geradkettige oder verzweigte aliphatische oder cycloaliphatische Reste mit 1 bis 12 C-Atomen oder repräsentieren Arylgruppen mit 6 bis 14 C-Atomen, darstellen, wobei einer der Reste $R_1$ und $R_2$ auch H sein kann.

Bevorzugt sind kurzkettige Alkylgruppen mit 1 bis 4 C-Atomen wie z.B. Methyl-, Ethyl-, Propyl- oder Butylreste, die gegebenenfalls auch verzweigt oder ungesättigt sein können. Besonders bevorzugt werden Diethylamin und Methylamin, die wohlfeil und gut handhabbar sind.

Als Arylreste bevorzugt werden Phenyl- oder Naphthylreste, die gegebenenfalls noch Substituenten wie z.B. Methyl, Ethyl oder sonstige Gruppen tragen können. Es können auch Aminvorstufen eingesetzt werden, die bei der jeweiligen Reaktionstemperatur die entsprechenden primären oder sekundären Amine abspalten. Die Art des verwendeten Amins übt einen gewissen Einfluß auf das erhaltene Metallcarbid aus. So führen kohlenstoffreiche Amine wie z.B. tert. Butylamin im Normalfall zu carbidreicheren Phasen und kohlenstoffarme Amine wie z.B. Methylamin zu carbidärmeren Phasen.

Das primäre oder sekundäre Amin dient beim Verfahren der Erfindung gleichzeitig als Reduktionsmittel und Kohlenstofflieferant. Es wird in der Regel gegebenenfalls mit Hilfe eines Inertgases wie z.B. Stickstoff oder Argon, in die Gasphase gebracht und der Gasstrom über die sauerstoffhaltige Metallverbindung geleitet. Auf diese Weise ist es möglich, das Amin solange immer wieder im Kreislauf über die metallhaltige Verbindung zu führen, bis diese vollständig in das Metallcarbid der gewünschten Zusammensetzung übergeführt ist. Diese Verfahrensweise ergibt auch eine konstante Aminzufuhr, die über den Dampfdruck des Amins sowie über die Strömungsgeschwindigkeit geregelt werden kann.

Gemäß einer bevorzugten Ausführungsform wird dem Inertgas Wasserstoff zudosiert. Auf diese Weise kann die Stöchiometrie der entstehenden Carbide gezielt kontrolliert werden, weil der freie Kohlenstoff mit dem Wasserstoff abreagiert.

Ein besonderer Vorteil des erfindungsgemäßen Verfahrens besteht darin, daß man mit einem stöchiometrischen Amin-Überschuß arbeiten kann, der nicht genau kontrolliert werden muß. Arbeitet man mit einem Überschuß, so empfiehlt sich aus Kostengründen die Rückgewinnung des überschüssigen Amins. Die Rückgewinnung des Amins kann beispielsweise sehr einfach durch Abkühlen des die Reaktionsapparatur verlassenden Gasstroms erfolgen, wobei sich die Abkühlungstemperatur nach dem Siedepunkt des eingesetzten Amins richtet. Da während der Reaktion molare Mengen an Wasser gebildet werden, entfernt man das im Amin vorhandene Wasser zweckmäßig zumindest teilweise, bevor man das regenerierte Amin in den Reaktionskreislauf zurückführt.

Auf absolute Wasserfreiheit des wieder eingesetzten Amins muß im Regelfall nicht geachtet werden, so daß auch an dieser Stelle das Verfahren kostengünstig bleibt.

Die Reaktionstemperatur, die im wesentlichen von den eingesetzten Reaktionskomponenten abhängt, kann in weiten Grenzen variiert werden und beträgt in der Regel 100 bis 1200°C, vorzugsweise 600 bis 1000°C. Die Reaktion kann problemlos bei Normaldruck oder geringem Überdruck (100 bis 500 kPa) in den üblichen Reaktionsapparaturen durchgeführt werden. Falls gewünscht oder erforderlich, ist es im Rahmen der Erfindung auch möglich, das entstehende Reaktionsprodukt einer Nachbehandlung mit einem Reduktionsmittel, vorzugsweise Wasserstoff, zu unterwerfen, um das Metallcarbid von Restsauerstoff zu befreien. Diese Nachbehandlung wird vorzugsweise bei 800 bis 1100°C vorgenommen.

Auf diese Weise erhält man ein besonders reines Produkt mit geringen N-, H- bzw. O-Gehalten.

Wesentliche Vorteile des erfindungsgemäßen Verfahrens liegen in der guten Verfügbarkeit und Handhabbarkeit der Ausgangsverbindungen sowie dem geringen Energieaufwand im Vergleich zu allen CVD-Verfahren, bei denen die Metallverbindungen erst energieaufwendig in die Gasphase gebracht werden müssen, bevor sie reagieren. Aufgrund dieser Vorteile ist das erfindungsgemäße Verfahren besonders gut für den technischen Maßstab geeignet.

Die nachfolgenden Beispiele sollen die Erfindung näher erläutern.

Beispiel 1

Herstellung von Wolframcarbid WC

In einem waagrecht angeordneten Quarzrohr von ca. 3 cm Durchmesser werden 10,0 g (40 mmol) han-

delsübliche Wolframsäure der Formel $H_2WO_4$ 60 Minuten auf 600°C erhitzt, wobei Argongas, das vorher eine mit Diethylamin beschickte Waschflasche passiert hat, über das pulverförmige Reaktionsgut geleitet wird. Die Strömungsgeschwindigkeit beträgt 250 ml/min. Dann wird der mit dem Amin beladene Gasstrom durch einen Argon-Strom ersetzt, der 30 Minuten lang bei 800 - 900°C über das Reaktionsgut geleitet wird. Es werden insgesamt 30 - 60 ml Diethylamin verbraucht. Das bei der Reaktion gebildete Wasser schlägt sich außerhalb des Ofens an der kälteren Rohrstrecke nieder, die größte Menge aber wird mit dem Gasstrom aus dem System entfernt. Der Reaktionsgasstrom wird zur Rückgewinnung des nicht verbrauchten Diethylamins auf -20°C abgekühlt, wobei das Diethylamin auskondensiert und im nächsten Ansatz wiederverwendet wird.

Nach dem Erkalten des Reaktionsrohres isoliert man das entstandene Wolframcarbid WC quantitativ (= 7,8 g) als feinkristallines, schwarzes Pulver. Es ist röntgenographisch (Röntgen-Pulveraufnahmen) sowie elementaranalytisch charakterisiert. Das Produkt enthält < 0,5 % N und < 0,1 % H.

```
Elementaranalyse
WC (195,9)
Berechnet   C   6,13 %       Gef.:   C   5,90 %
            W  93,87 %       Gef.:   W  93,50 %
```

Das Röntgen-Pulverspektrum entspricht den Literaturdaten für WC und zeigt keine andere Wolframcarbid-Phase.

Beispiel 2

Herstellung von Molybdäncarbid

Es werden wie in Beispiel 1 beschrieben 10,0 g $MoO_2$ 60 Minuten lang auf 600°C erhitzt, wobei ein mit Diethylamin beladener Argon-Gasstrom (Strömungsgeschwindigkeit 300 ml/min.) über das feste Reaktionsgut geleitet wurde.

Nach Abtrennung der oxidischen Anteile erhält man $Mo_2C$ als graues Pulver mit einer Ausbeute von 81 %.

Beispiel 3

Herstellung von Tantalcarbid

Es werden entsprechend Beispiel 1 20,0 g $Ta_2O_5$ 6 Stunden lang bei 800 - 1100°C erhitzt, wobei ein mit Diethylamin beladener Argon-Gasstrom (Strömungsgeschwindigkeit 400 - 500 ml/min.) über das pulverförmige Reaktionsgut geleitet wird.

Man erhält TaC als graues Pulver in quantitativer Ausbeute.

Beispiel 4

Herstellung von Wolframcarbid WC

Es werden wie in Beispiel 1 beschrieben 18 g Wolframdioxid 6 Stunden lang in einem Gasstrom aus Methylamin und Stickstoff (Volumenverhältnis $N_2/CH_3NH_2$ ca. 3 : 1; Strömungsgeschwindigkeit ca. 100 ml/min.) bei 900°C erhitzt. Nach dem Abkühlen erhält man ein graues Pulver, dessen röntgenographische Analyse WC ergibt. Das Produkt enthält < 0,5 % N und < 0,1 % H.

Beispiel 5

Herstellung von Wolframcarbid WC

Es wird analog Beispiel 4 verfahren, doch wird anstelle des dort beschriebenen Gasgemisches ein Gasstrom aus diethylamingesättigtem Formiergas bestehend aus 95 Vol.-% $N_2$ und 5 Vol.-% $H_2$ eingesetzt. Nach sechsstündiger Reaktionszeit wird ein dunkelgraues Pulver erhalten, dessen röntgenographische Analyse WC ergibt. Das Produkt enthält < 0,5 % N und < 0,1 % H.

**Patentansprüche**

1. Verfahren zur Herstellung von Metallcarbiden von Metallen der Elemente IV B, V B und VI B des Periodensystems,
   **dadurch gekennzeichnet,**
   daß man eine sauerstoffhaltige Verbindung dieser Metalle, ausgewählt aus der Gruppe Oxide, Hydroxide und Oxyhydroxide, mit einem primären oder sekundären Amin bei Temperaturen zwischen 100 und 1200°C zur Umsetzung bringt.

2. Verfahren nach Anspruch 1,
   **dadurch gekennzeichnet,**
   daß man ein primäres oder sekundäres Amin der Formel $R_1R_2NH$ einsetzt, in der $R_1$ und $R_2$ aliphatische oder cycloaliphatische Alkylreste mit 1 bis 12 C-Atomen oder Arylreste mit 6 bis 14 C-Atomen bedeuten und einer der Reste $R_1$ und $R_2$ auch Wasserstoff sein kann.

3. Verfahren nach Anspruch 2,
   **dadurch gekennzeichnet,**
   daß $R_1$ und $R_2$ je einen aliphatischen Alkylrest mit 1 bis 4 C-Atomen darstellen.

4. Verfahren nach Anspruch 3,
   **dadurch gekennzeichnet,**
   daß man als sekundäres Amin Diethylamin einsetzt.

5. Verfahren nach den Ansprüchen 1 oder 2,
   **dadurch gekennzeichnet,**
   daß man als primäres Amin Methylamin verwendet.

6. Verfahren nach einem der vorhergehenden Ansprüche,
   **dadurch gekennzeichnet,**
   daß man als Oxyhydroxid Wolframsäure einsetzt.

7. Verfahren nach einem der vorhergehenden Ansprüche,
   **dadurch gekennzeichnet,**
   daß man bei wasserhaltigen oder wasserabspaltenden Metallverbindungen eine thermische Vorbehandlung bei 100 bis 300°C vornimmt.

8. Verfahren nach einem der vorhergehende Ansprüche,
   **dadurch gekennzeichnet,**
   daß man das primäre oder sekundäre Amin, gegebenenfalls mit Hilfe eines Inertgases in die Gasphase bringt und den Gasstrom über die sauerstoffhaltige Metallverbindung leitet.

9. Verfahren nah Anspruch 8,
   **dadurch gekennzeichnet,**
   daß man als Inertgas Stickstoff oder Argon verwendet.

10. Verfahren nach den Ansprüchen 8 oder 9,
    **dadurch gekennzeichnet,**
    daß man Wasserstoff enthaltendes Inertgas verwendet.

11. Verfahren nach einem der vorhergehenden Ansprüche,
    **dadurch gekennzeichnet,**
    daß man einen stöchiometrischen Überschuß an primärem oder sekundärem Amin einsetzt.

12. Verfahren nach Anspruch 11,
    **dadurch gekennzeichnet,**
    daß man das überschüssige Amin in den Reaktionskreislauf zurückführt.

13. Verfahren nach einem der vorhergehenden Ansprüche,
    **dadurch gekennzeichnet,**
    daß man die Umsetzung bei Temperaturen von 600 bis 1000°C vornimmt.

**14.** Verfahren nach einem der vorhergehenden Ansprüche,
**dadurch gekennzeichnet,**
daß man die Reaktion bei einem Druck von 100 bis 500 kPa durchführt.

**15.** Verfahren nach einem der vorhergehenden Ansprüche,
**dadurch gekennzeichnet,**
daß man als Ausgangsverbindung Metallverbindungen mit einem nur geringen Sauerstoffanteil einsetzt.

**16.** Verfahren nach einem der vorhergehenden Ansprüche,
**dadurch gekennzeichnet,**
daß man die sauerstoffhaltige Metallverbindung als frisch gefälltes oder/und ungeglühtes Produkt einsetzt.

**Claims**

**1.** Process for the production of metal carbides of metals of the elements IVB, VB and VIB of the Periodic System, characterised in that one brings an oxygen-containing compound of these metals, selected from the group oxides, hydroxides and oxyhydroxides, to reaction with a primary or secondary amine at temperatures between 100 and 1200°C.

**2.** Process according to claim 1, characterised in that one uses a primary or secondary amine of the formula $R_1R_2NH$, in which $R_1$ and $R_2$ signify aliphatic or cycloaliphatic alkyl radicals with 1 to 12 C-atoms or aryl radicals with 6 to 14 C-atoms and one of the radicals $R_1$ and $R_2$ can also be hydrogen.

**3.** Process according to claim 2, characterised in that $R_1$ and $R_2$ each represent an aliphatic alkyl radical with 1 to 4 C-atoms.

**4.** Process according to claim 3, characterised in that one uses diethylamine as secondary amine.

**5.** Process according to claims 1 or 2, characterised in that one uses methylamine as primary amine.

**6.** Process according to one of the preceding claims, characterised in that one uses tungstic acid as oxyhydroxide.

**7.** Process according to one of the preceding claims, characterised in that, in the case of metal compounds containing water or splitting off water, one carries out a thermal pre-treatment at 100 to 300°C.

**8.** Process according to one of the preceding claims, characterised in that one brings the primary or secondary amine into the gas phase, possibly with the help of an inert gas, and passes the gas stream over the oxygen-containing metal compound.

**9.** Process according to claim 8, characterised in that one uses nitrogen or argon as inert gas.

**10.** Process according to claims 8 or 8, characterised in that one uses hydrogen-containing inert gas.

**11.** Process according to one of the preceding claims, characterised in that one uses a stoichiometric excess of primary or secondary amine.

**12.** Process according to claim 11, characterised in that one returns the excess amine into the reaction cycle.

**13.** Process according to one of the preceding claims, characterised in that one carries out the reaction at temperatures of 600 to 1000°C.

**14.** Process according to one of the preceding claims, characterised in that one carries out the reaction at a pressure of 100 to 500 kPa.

**15.** Process according to one of the preceding claims, characterised in that one uses metal compounds with only a small portion of oxygen as starting compound.

**16.** Process according to one of the preceding claims, characterised in that one uses the oxgigen-containing metal compound as freshly precipitated and/or non-calcined product.

## Revendications

**1.** Procédé de fabrication de carbures métalliques de métaux des éléments IVB, VB et VIB de la classification périodique des éléments, caractérisé en ce qu'on fait réagir un composé oxygéné de ces métaux, choisi dans le groupe des oxydes, hydroxydes et oxyhydroxydes, avec une amine primaire ou secondaire à des températures entre 100 et 1200°C.

**2.** Procédé selon la revendication 1, caractérisé en ce qu'on met en oeuvre une amine primaire ou secondaire de formule $R_1R_2NH$ dans laquelle $R_1$ et $R_2$ représentent des restes alkyles aliphatiques ou cycloaliphatiques avec 1 à 12 atomes de C ou des restes aryles avec 6 à 14 atomes de C et dans laquelle un des restes $R_1$ et $R_2$ peut également être l'hydrogène.

**3.** Procédé selon la revendication 2, caractérisé en ce que $R_1$ et $R_2$ représentent chacun un reste alkyle aliphatique avec 1 à 4 atomes de C.

**4.** Procédé selon la revendication 3, caractérisé en ce qu'on met en oeuvre de la diéthylamine en tant qu'amine secondaire.

**5.** Procédé selon la revendication 1 ou 2, caractérisé en ce qu'on utilise de la méthylamine comme amine primaire.

**6.** Procédé selon l'une des revendications précédentes, caractérisé en ce qu'on met en oeuvre de l'acide tungstique en tant qu'oxyhydroxyde.

**7.** Procédé selon l'une des revendications précédentes, caractérisé en ce que, dans le cas de composés métalliques hydratés ou déshydratants, on procède à un prétraitement thermique entre 100 et 300°C.

**8.** Procédé selon l'une des revendications précédentes, caractérisé en ce qu'on amène l'amine primaire ou secondaire, au besoin à l'aide d'un gaz inerte, dans la phase gazeuse et fait passer le courant gazeux au-dessus du composé métallique oxygéné.

**9.** Procédé selon la revendication 8, caractérisé en ce qu'on utilise de l'azote ou de l'argon comme gaz inerte.

**10.** Procédé selon la revendication 8 ou 9, caractérisé en ce qu'on utilise un gaz inerte contenant de l'hydrogène.

**11.** Procédé selon l'une des revendications précédentes, caractérisé en ce qu'on met en oeuvre un excès stoechiométrique d'amine primaire ou secondaire.

**12.** Procédé selon la revendication 11, caractérisé en ce qu'on renvoie l'amine excédentaire dans le circuit réactionnel.

**13.** Procédé selon l'une des revendications précédentes, caractérisé en ce qu'on conduit la réaction à des températures de 600 à 1000°C.

**14.** Procédé selon l'une des revendications précédentes, caractérisé en ce qu'on effectue la réaction sous une pression de 100 à 500 kPa.

**15.** Procédé selon l'une des revendications précédentes, caractérisé en ce qu'on met en oeuvre, en tant que composé de départ, des composés métalliques avec seulement une faible proportion d'oxygène.

**16.** Procédé selon l'une des revendications précédentes, caractérisé en ce qu'on met en oeuvre le composé métallique oxygéné sous forme de produit fraîchement précipité ou/et non calciné.